Europäisches Patentamt

(19) European Patent Office

Office européen des brevets

(11) Publication number: **0 012 527**
A1

# EUROPEAN PATENT APPLICATION

(21) Application number: 79302643.6

(22) Date of filing: 20.11.79

(51) Int. Cl.³: **A 01 B 39/08,** A 01 B 39/18

(30) Priority: 07.12.78 GB 4764578

(43) Date of publication of application: 25.06.80
Bulletin 80/13

(84) Designated Contracting States: **AT BE CH DE FR GB IT
LU NL SE**

(71) Applicant: **GEEST INDUSTRIAL GROUP LIMITED, White
House Chambers, Spalding Lincolnshire PE11 2AL (GB)**

(72) Inventor: **Beeton, Dennis James, 18 New Cut Road,
Thorney Peterborough (GB)**
Inventor: **Beeton, Leonard Alfred, 2 Newton Road
Walcot, Nr Folkingham, Sleaford, Lincolnshire (GB)**

(74) Representative: **Rowe, Eric Nielsen et al, c/o Edward
Evans & Co. Chancery House 53-64 Chancery Lane,
London WC2A 1SD (GB)**

(54) Rotary cultivators.

(57) Discs (4 und 5) are mounted on a shaft (3) and cables
(6) extend between the peripheries of adjacent discs (4
and 5) for use as ground engaging means.

The shaft (3) and the discs (4 and 5) are rotated in
the same direction as the wheels (2) of the cultivator, but
a different peripheral speed. As a result of the difference in
peripheral speeds of the wheels (2) and the discs (4 and 5),
the cables (6) are caused to cultivate the ground. How-
ever, as the discs (4 and 5) are rotated in the same direction as the wheels (2), any weeds or other material dis-
lodged by the movement of the cables (6) will be carried
rearwardly by the cables (6) and deposited behind the ca-
bles (6), thus avoiding a build-up of unwanted material in
front of the cultivator.

## Rotary Cultivators

### FIELD OF THE INVENTION

The invention relates to rotary cultivators such as rotary hoes for cutting weeds. In particular, the invention relates to rotary cultivators which are pushed, pulled or otherwise driven by a motorised vehicle such as a tractor

### BACKGROUND ART

Known rotary cultivators comprise a support structure, at least two wheels mounted on the support structure for rotation about axes which are parallel to an axis extending transversely of the support structure, so as to carry the support structure; a shaft extending on an axis lying in a vertical plane which is parallel to a vertical plane through said transversely extending axis; rotary ground engaging means mounted on the shaft; and drive means for rotating the ground engaging means.

In conventional weed-cutting rotary hoes which are driven by motorised vehicles such as agricultural tractors, "L"-shaped knives mounted more or less radially on central hubs or, alternatively, straight blades mounted on a cylindrical drum, parallel to the axis of the drum, are caused to rotate in the same direction as the wheels of the driving vehicle so as to cut through or scrape the earth and pulverise the weeds with the soil. However, in use of these hoes, excessive power is often required because the force supplied to the weeds by the cutting blades acts in the opposite direction to the motion of the hoe so that the momentum of the hoe and the vehicle driving the hoe are not transmitted directly to the weeds being cleared and the blades have to be rotated with a circumferential speed which is greater than the speed at which the hoe is moving along the ground. On the other hand, if the rotary cutter blades are replaced by a non-rotating cutter blade which travels across the soil in a fixed position relative to the driving vehicle, the vehicle speed is limited to the maximum speed allowed by the prevailing conditions and the operator's ability, so that weed cutting becomes a relatively slow, time-consuming operation. Moreover, in view of the fixed disposition of the hoe blade relative to the driving vehicle, there can be a continuous build-up of material in front of the scraper blade and, once again, excessive power is required.

## DISCLOSURE OF THE INVENTION

It is therefore the purpose of the present invention to provide a rotary cultivator which can be propelled by a motorised vehicle at relatively high speed, without expending excessive power, in such a way that the cutting or scraping elements of the cultivator are moved relative to the ground at a speed which is closer to the maximum cultivating speed of the cultivator along the ground.

This purpose is achieved by modifying a rotary cultivator of known construction so as to provide ground engaging means which comprise a plurality of discs, co-axially mounted on axially spaced parts of the shaft, and a plurality of elongate members which extend between the peripheral margins of adjacent pairs of discs and by mounting these ground engaging means so that, in use, the elongate members penetrate the ground to the same depth, along their entire lengths.

Thus, according to the invention, there is provided a support structure; at least two wheels mounted on the support structure, for rotation about axes which are parallel to an axis extending transversely of the support structure, so as to carry the support structure; a shaft extending on an axis lying a vertical plane which is parallel to a vertical plane through said transversely extending axis; rotary ground engaging means mounted on the shaft; and drive means for rotating the ground engaging means; characterised in that the ground engaging means comprise a plurality of discs coaxially mounted on axially spaced parts of the shaft; a plurality of elongate members extend between the peripheries of adjacent pairs of discs; and in that the rotary ground engaging means are mounted so that, in use, the elongate members penetrate the ground to the same depth, throughout their lengths.

With this form of arrangement, the elongate members acting as cultivating elements are successively engaged with the ground and then withdrawn so as to ensure that there is no continuous build-up of material ahead of the elongate members even though the forward trust of the cultivator is transmitted directly to elongate members in engagement with the ground. Moreover, as the discs carrying the elongate members are rotated in the same direction as the wheels, weeds and other materials dislodged by the forward movement of elongate members are nevertheless discharged rearwardly as a result of the forward rotation of the discs.

In a preferred embodiment of the invention, in which construction is simplified, the shaft extends horizontally and, in this case, the discs are of equal diameter and are arranged so that the peripheries of the discs define planes which extend perpendicular to the axis of the shaft. In this case the elongate members extend along axes which are parallel to the shaft axis.

Where the cultivator is intended for use in ground where weeds are growing, for example as a hoe for removing the weeds, the discs may be rotated in the same direction as the wheels, but with a lower peripheral speed.

It is preferred that the ratio of the peripheral speed of the wheels of the support structure to the peripheral speed of the discs is between 4:1 and 6:1. Thus, in a typical construction in which this ratio is 5:1, a point on the periphery of a disc rotates through one unit of length while the axis of the shaft travels forwardly through five units of length. This means that when one of the elongate members is disposed vertically below the axis of the cutter shaft, its forward speed is 20% lower than the forward speed of the axis of the cutter shaft. Thus, if the elongate member is cultivating the earth at the maximum speed for weeding, the hoe may be moved across the ground at a speed which is 25% higher than the cultivating speed of the elongate member, thus reducing the time taken for hoeing.

In order to cultivate the spaces between rows of plants, the discs may be mounted on the cutter shaft in pairs which are arranged to travel between the rows of plants and, in this case, each of the elongate members extends between the two discs of each such pair. No elongate members extend between the discs arranged to travel along each side of the row of plants.

A rotary hoe embodying the invention is hereinafter described, by way of example, with reference to the accompanying drawings.

BRIEF DESCRIPTION OF THE DRAWINGS

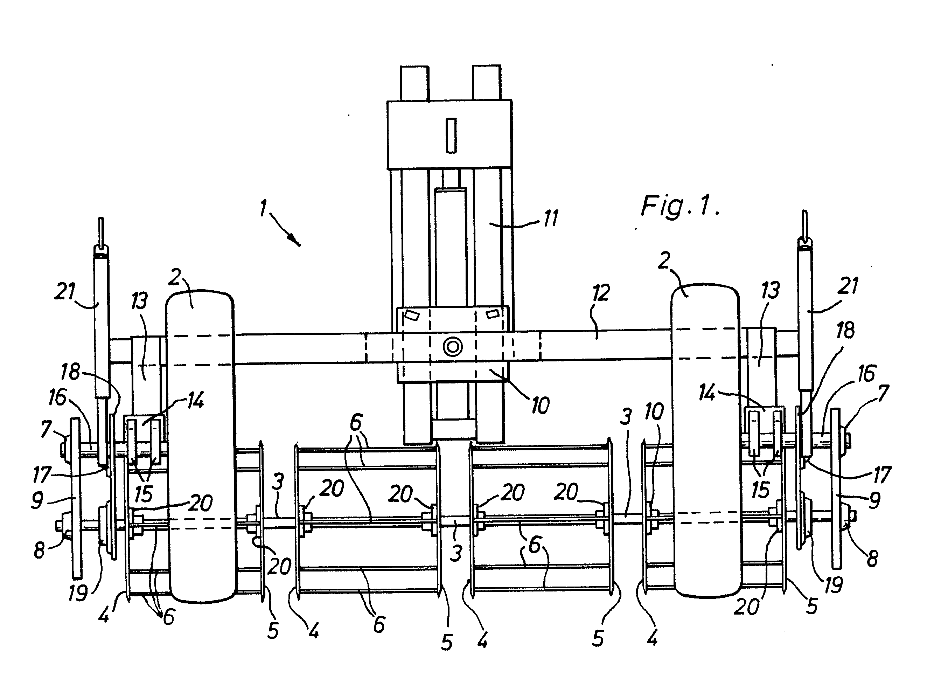

Figure 1 is a front elevation of a rotary hoe embodying the invention;

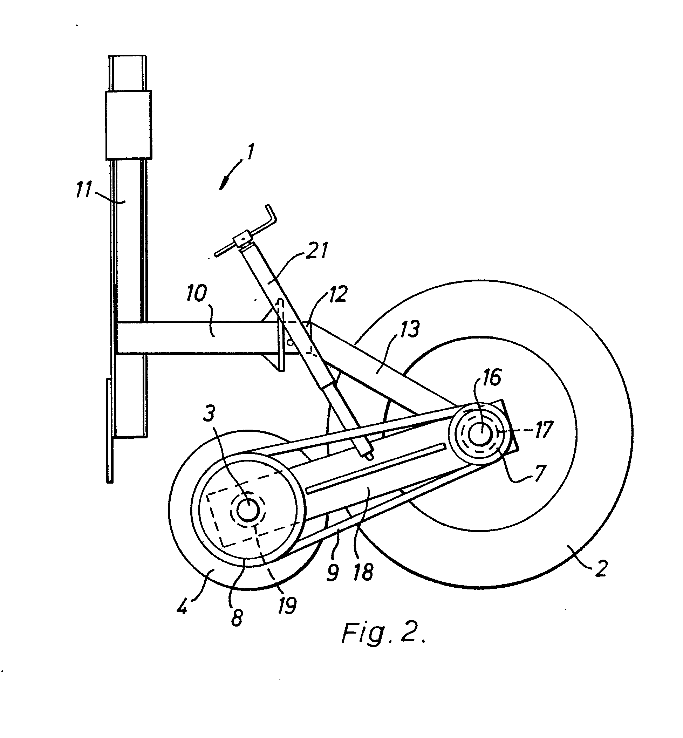

Figure 2 is a side elevation of the rotary hoe shown in Figure 1; and

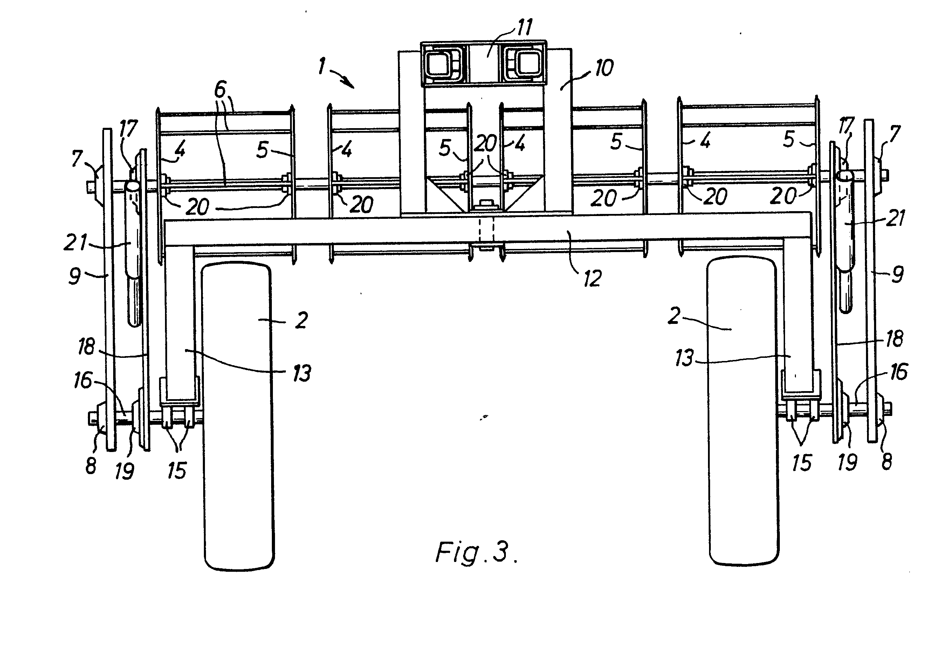

Figure 3 is a plan view of the rotary hoe shown in Figures 1 and 2.

BEST MODE FOR CARRYING OUT THE INVENTION

The rotary hoe shown in the drawings has a support structure 1 carried by wheels 2. The support structure 1 has a carriage 10 mounted on a vertical guide 11 adapted for detachable connection to the front of a tractor (not shown). A cross bar 12 is pivotally supported by the carriage 10 for rolling movement relative to the tractor and, at its opposite ends, carries support bars 13 which extend forwardly and, at their forward ends, carry base plates 14. Two self aligning bearings 15 are mounted on each of the base plates 14 and support axles 16 for the wheels 2.

The axles 16 carry bearings 17 connected to trailing links 18. Further bearings 19, at the rear ends of the trailing links 18 carry a shaft 3. Pairs of equal diameter discs 4 and 5 are mounted on bosses 20 at spaced intervals along the shaft 3 so as to rotate with the shaft 3. Six cables 6 are mounted so as to extend between the peripheral edges of the discs 4 and 5 in each pair. The discs 4 and 5 are so arranged that the cables 6 can be used to cultivate or hoe the spaces between rows of cultivated plants while the adjacent discs of adjacent pairs of discs travel along opposite sides of each row of cultivated plants. Screw jacks 21 are provided between the ends of the cross bar 12 and the trailing links 18 for varying the height of the shaft 3 relative to the height of the axles 16.

In order to drive discs 4 and 5 in the same direction as the wheels 2, the axle 16 supported on each side of the support structure 1 and the adjacent end of the shaft 3 are respectively provided with two sprockets 7 and 8 which are interconnected by a roller chain 9.

In a typical construction, where the wheels 2 have an outer diameter of 91.4 cm and the discs 4 and 5 have an outer diameter of 45.7 cm and where the sprockets 7 and 8 have pitch circle diameters of 12 cm and 30 cm, the circumferential speed at the periphery of the wheel 11 is $\frac{914}{457} \cdot \frac{30}{12} = 5$ times the circumferential speed of the periphery of the discs 4 and 5. This means that when the hoe is travelling forward at a speed of 5x (where x is a unit of speed), the cables 6 scrape the surface of the ground at a speed of 4x so that if the cables 6 scrape the earth at the maximum speed for weeding, the hoe is able to travel at a twenty-five percent higher speed.

Clearly, because the discs 4 and 5 rotate with a different peripheral speed to wheels 2, the cables 6 must cultivate the surface of the ground. However, as the discs 4 and 5 rotate in the same direction as the wheels, weeds and other material dislodged by forward movement of the cables 6 will be discharged rearwardly, as a result of the forward rotation of the discs 4 and 5, and so will not build up in front of the hoe.

The cultivator is preferably constructed and operated so that, in use, at least one of the cables 6 (or other elongate members) engages the ground at all times and two engage the ground for at least part of the time. It is for this reason that there should normally be at least four elongate members, such as the cables 6. However, if there are more than eight such elongate members provided in a weeding hoe, there is a tendency for the uprooted weeds to become entangled with the elongate members instead of being laid on the surface of the ground which has been hoed.

In a modification of the invention, for cultivating undulating land, two or more shafts 3 are provided with rotary ground engaging means 4, 5 and 6, constructed and arranged as hereinbefore described. Preferably, each shaft is supported by a separate cross bar, like cross bar 12, and each separate cross bar is pivotally supported on the cross bar 12 for independent rolling articulation.

Although reference numerals have been used in the appended claims to improve the intelligibility of these claims, it is expressly stated that these reference numerals should not be construed as limiting the claims to the constructions illustrated in the accompanying drawings.

CLAIMS

1. A rotary cultivator comprising:

a support structure (1);

at least two wheels (2) mounted on the support structure (1) for rotation about axes which are parallel to an axis extending transversely of the support structure (1), so as to carry to support structure (1);

a shaft (3) extending on an axis lying a vertical plane which is parallel to a vertical plane through said transversely extending axis;

rotary ground engaging means (4, 5 and 6) mounted on the shaft (3); and

drive means (7, 8 and 9) for rotating the ground engaging means (4, 5 and 6);

characterised in that:

the ground engaging means (4, 5 and 6) comprise a plurality of discs (4 and 5) co-axially mounted on axially spaced parts of the shaft (3);

a plurality of elongate members (6) extend between the peripheries of adjacent pairs of discs (4 and 5); and

the rotary ground engaging means (4, 5 and 6) are mounted so that, in use, the elongate members (6) penetrate the ground to the same depth, throughout their lengths.

0012527

2.      A rotary cultivator, according to Claim 1, characterised in that:

the shaft (3) extends horizontally;

the discs (4 and 5) are of equal diameter and are arranged so that the peripheries of the discs (4 and 5)
define planes which extend perpendicular to the axis
of the shaft (3);   and

the elongate members (6) extend along axes which are
parallel to the axis of the shaft (3).

3.      A rotary cultivator, according to Claim 1 or
Claim 2, characterised in that the discs (4 and 5) are
rotated in the same direction as the wheels (2), but
with a lower peripheral speed.

4.      A rotary cultivator, according to Claim 3,
characterised in that the ratio of the peripheral
speed of the wheels (2) carrying the support structure
(1) to the peripheral speed of the discs (4 and 5) is
between 4:1 and 6:1.

5.      A rotary cultivator, according to any preceding
claim, characterised in that:

the discs (4 and 5) are arranged on the cutter shaft (3) in pairs;  and

the elongate members (6) only extend between the discs
(4 and 5) of each of said pairs.

6.    A rotary cultivator, according to any preceding
claim, characterised in that the drive means comprise:

a sprocket (7) connected to at least one of the
wheels (2);

a sprocket (8) connected to the shaft (3);  and

a roller chain (9) interconnecting the sprockets (7
and 8).

7.    A rotary cultivator, according to any preceding
claim, characterised in that:

the support structure (1) includes a base (10 and 11)
and a cross bar (12) pivotally connected to the base
(10 and 11) for rolling articulation about a horizontal
axis extending perpendicular to the vertical plane
through said transversely extending axis;  and

support means (13) interconnect the shaft (3) and the
cross bar (12).

Fig.1.

*Fig. 2.*

Fig.3.

## EUROPEAN SEARCH REPORT

EP 79 302 643.6

| DOCUMENTS CONSIDERED TO·BE RELEVANT | | | CLASSIFICATION OF THE APPLICATION (Int. Cl.) |
|---|---|---|---|
| Category | Citation of document with indication, where appropriate, of relevant passages | Relevant to claim | |
| X | US – A – 2 123 972 (M.M. SIMPSON) <br> * entire document * <br> -- | 1-6 | A 01 B 39/08 <br> A 01 B 39/18 |
| X | US – A – 2 279 652 (A.M. BEARD) <br> * fig. 1, 2 * <br> -- | 1,2,5, 7 | |
| | DE – C – 585 827 (H. BARTHOLD) <br> * page 1, line 66 to page 2, line 4 * <br> -- | 1,4 | |
| | DE – C – 382 889 (M. LIENIG) <br> * page 2, lines 73 to 94; fig. 1 * <br> -- | 1,4 | **TECHNICAL FIELDS SEARCHED (Int.Cl.)** |
| ·A | DE – B – 1 158 735 (MASSEY-FERGUSON LTD.) <br> * fig. 1, 2 * <br> ---- | 7 | A 01 B 33/02 <br> A 01 B 39/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> Berlin | Date of completion of the search <br> 20-02-1980 | Examiner <br> SCHOFER | |